(19) Europäisches Patentamt / European Patent Office / Office européen des brevets

(11) **EP 4 178 789 B1**

(12) **FASCICULE DE BREVET EUROPEEN**

(45) Date de publication et mention de la délivrance du brevet:
**11.03.2026 Bulletin 2026/11**

(21) Numéro de dépôt: **21749240.4**

(22) Date de dépôt: **09.07.2021**

(51) Classification Internationale des Brevets (IPC):
**B29C 70/54** (2006.01)    **B29C 70/46** (2006.01)
**G01N 11/00** (2006.01)    **B29C 70/20** (2006.01)
**B29C 70/44** (2006.01)    **G01N 3/08** (2006.01)

(52) Classification Coopérative des Brevets (CPC):
**B29C 70/54; B29C 70/202; B29C 70/44;
G01N 3/08; G01N 11/00;** B29K 2101/12;
G01N 2203/0092; G01N 2203/0096

(86) Numéro de dépôt international:
**PCT/FR2021/051283**

(87) Numéro de publication internationale:
**WO 2022/008855 (13.01.2022 Gazette 2022/02)**

(54) **PROCÉDÉ D'ANALYSE DE SEMI-PRODUITS COMPRENANT UNE RÉSINE THERMOPLASTIQUE**

VERFAHREN ZUR ANALYSE VON HALBZEUGEN MIT EINEM THERMOPLASTISCHEN HARZ

METHOD FOR ANALYSING SEMI-FINISHED PRODUCTS COMPRISING A THERMOPLASTIC RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2020 FR 2007315**

(43) Date de publication de la demande:
**17.05.2023 Bulletin 2023/20**

(73) Titulaire: **ARKEMA FRANCE**
**92800 Puteaux (FR)**

(72) Inventeurs:
• **CAYZAC, Henri-Alexandre**
**27470 SERQUIGNY (FR)**
• **PASCAL, Jérôme**
**27470 SERQUIGNY (FR)**
• **CIPRIANI, Régis**
**27470 SERQUIGNY (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**EP-A1- 2 090 423**     **EP-A1- 3 606 984**
**WO-A1-2019/097148**

• **SAFFAR FLORENCE ET AL: "In-situ Monitoring of the Out-Of-Autoclave Consolidation of Carbon/Poly-Ether-Ketone-Ketone Prepreg Laminate", FRONTIERS IN MATERIALS, vol. 7, 25 June 2020 (2020-06-25), XP055787125, DOI: 10.3389/fmats.2020.00195**

**Description**

**Domaine de l'invention**

La présente invention concerne un procédé d'analyse de semi-produits comprenant des fibres de renfort et une résine thermoplastique ainsi que lesdits semi-produits. La présente invention concerne également un procédé de fabrication d'une pièce composite à partir de ce semi-produit.

**Arrière-Plan Technique**

Les matériaux composites associant une résine thermoplastique à des fibres de renfort présentent, en raison de leurs excellentes propriétés mécaniques pour un faible poids, un grand intérêt dans de nombreux domaines, notamment dans l'industrie aéronautique et spatiale, mais aussi dans l'industrie automobile et les équipements de sport.

Ces matériaux composites sont généralement fabriqués par consolidation de semi-produits constitués de fibres de renfort enrobées de résine tels que des pré-imprégnés sous forme de nappes unidirectionnelles, de mèches ou de tissés.

Ces semi-produits peuvent être obtenus par imprégnation des fibres par la résine. Il existe différents procédés, dans lesquels la résine peut être fondue, soit dissoute dans un solvant, soit sous forme de poudre, en lit fluidisé, ou dispersée dans une solution aqueuse. Les fibres imprégnées sont ensuite le cas échéant débarrassées du solvant ou de la solution aqueuse puis chauffées afin de fondre la résine retenue et former le semi-produit.

Les composites sont obtenus à partir des semi-produits par empilement des semi-produits en une préforme thermoplastique et densification subséquente de cette préforme.

La densification de la préforme peut être réalisée par exemple dans un autoclave. Une pièce composite obtenue par consolidation autoclave possède un très bon niveau de densification, caractérisée par un taux de porosité de 1 à 2%. C'est la pression appliquée par l'autoclave (jusqu'à plus de 10 bars) qui, couplée au cycle thermique, permettent aux semi-produits de combler par écoulement les porosités présentes dans la préforme. L'écoulement dans les semi-produits pour densifier la préforme thermoplastique constitue ainsi un facteur clef de la consolidation d'une pièce composite.

Aujourd'hui, le monde industriel, notamment aéronautique, cherche à s'affranchir des autoclaves. En effet, ces équipements sont extrêmement énergivores et compliquent la fabrication de pièces de grande dimension. Aussi, l'industrie se tourne vers le procédé de consolidation dit « hors-autoclave » (vacuum bag only, out of autoclave). Ce procédé permet une consolidation sous plus faible pression, appliquée à la préforme au moyen d'une simple bâche à vide, c'est-à-dire d'une membrane sous laquelle on applique un vide pour plaquer la bâche sur la préforme à consolider avec une pression de l'ordre d'un bar. Le cycle thermique permettant la consolidation peut être réalisé dans une simple étuve. Cependant, ce procédé requiert une bonne capacité d'écoulement du semi-produit sous faible pression afin d'aboutir à une densification satisfaisante dans la pièce composite.

Les documents US 2014/0154472, US 2010/0170637, US 2014/0005331, US 2013/0164498 et US 2011/0097575 concernent la fabrication de matériaux composites ayant des propriétés adhésives et/ou mécaniques améliorées grâce à la présence d'une couche de résine entre les différentes couches de semi-produits.

Le document US 2012/0107560 concerne la fabrication de matériaux composites à partir de semi-produits ayant à leur surface des particules qui permettent l'amélioration des propriétés mécaniques des matériaux composites fabriqués.

WO2019/097148 A1 décrit un procédé de fabrication de semi-produits par imprégnation de fibres en dispersion aqueuse de poudre de PAEK.

Le document EP 2 090 423 A1 décrit un semi-produit comprenant des fibres de renfort ayant une orientation essentiellement unidirectionnelle et une résine thermoplastique.

La publication du journal FRONTIERS IN MATERIALS avec le titre "In-situ Monitoring of the Out-Ot-Autoclave Consolidation of Carbon/Poly-Ether-Ketone-Ketone Prepreg Laminate" divulgue la surveillance in situ de l'évolution de l'épaisseur d'un laminé thermoplastique pendant un cycle de consolidation.

Il existe toujours un besoin de fournir un semi-produit pouvant être consolidé de manière efficace, afin de préparer des matériaux composites de haute qualité.

Il existe également un besoin de fournir un procédé d'analyse des semi-produits afin de déterminer ceux pouvant être consolidés de manière efficace pour préparer des matériaux composites de haute qualité.

**Résumé de l'invention**

L'invention concerne en premier lieu un procédé d'analyse selon la revendication 1 de semi-produits comprenant des fibres de renfort ayant une orientation essentiellement unidirectionnelle et une résine thermoplastique, le procédé comprenant :

- un premier test comprenant :

  - la préparation d'un empilement d'au moins deux semi-produits identiques, les fibres des semi-produits adjacents ayant une différence d'orientation de 0° ;
  - le chauffage de l'empilement jusqu'à une température supérieure à la température de fusion de la résine ;
  - le refroidissement de l'empilement jusqu'à une température inférieure à la température de cristallisation ;
  - l'empilement étant comprimé selon une direction de compression orthogonale à l'orientation des fibres de l'ensemble des semi-produits pendant le chauffage et le refroidissement ;
  - la mesure de l'épaisseur de l'empilement selon la direction de compression au cours du temps ;
  - la détermination de la viscosité homogène équivalente de l'empilement à partir de la mesure de l'épaisseur de l'empilement au cours du temps ; et

- un deuxième test comprenant :

  - la préparation d'un empilement d'au moins deux semi-produits identiques, les fibres des semi-produits adjacents ayant une différence d'orientation de 90° en valeur absolue ;
  - le chauffage de l'empilement jusqu'à une température supérieure à la température de fusion de la résine ;
  - le refroidissement de l'empilement jusqu'à une température inférieure à la température de cristallisation;
  - l'empilement étant comprimé selon une direction de compression orthogonale à l'orientation des fibres de l'ensemble des semi-produits pendant le chauffage et le refroidissement ;
  - la mesure de l'épaisseur de l'empilement selon la direction de compression au cours du temps ;
  - la détermination de la viscosité homogène équivalente de l'empilement à partir de la mesure de l'épaisseur de l'empilement au cours du temps ;

le procédé comprenant en outre :

- la détermination d'un premier paramètre correspondant à la réduction d'épaisseur totale de l'empilement des semi-produits au cours du premier test ;
- la détermination d'un deuxième paramètre correspondant au rapport de la viscosité homogène équivalente de l'empilement des semi-produits du deuxième test sur la viscosité homogène équivalente de l'empilement des semi-produits du premier test ;
- la détermination d'un troisième paramètre correspondant au rapport de l'épaisseur de l'empilement des semi-produits du premier test au bout d'une durée de référence à partir de l'instant, au cours de l'étape de chauffage, du début de fusion de l'empilement des semi-produits, sur l'épaisseur de l'empilement des semi-produits du premier test à l'instant, au cours de l'étape de chauffage, du début de fusion de l'empilement des semi-produits.

Selon certains modes de réalisation, la compression dans le premier test et le deuxième test est à une pression de 0,5 à 2 bar, de préférence de 0,8 bar à 1,2 bar, de préférence de 0,8 bar.

Selon certains modes de réalisation, la durée de référence pour la détermination du troisième paramètre est de 500 s.

Selon certains modes de réalisation, le procédé comprend une étape de validation de l'empilement des semi-produits si le premier paramètre, le deuxième paramètre et le troisième paramètre ont des valeurs comprises dans des intervalles cibles respectifs.

Selon certains modes de réalisation :

- l'intervalle cible du premier paramètre est d'au moins 15 % ; et/ou
- l'intervalle cible du deuxième paramètre est de 1 à 5 ; et/ou
- l'intervalle cible du troisième paramètre est inférieur à 0,8 pour une durée de référence de 500 s.

Selon certains modes de réalisation, le procédé comprend une étape de validation de l'empilement des semi-produits si le premier paramètre, le deuxième paramètre et le troisième paramètre ont des valeurs comprises dans des intervalles cibles respectifs, et dans lequel la compression dans le premier test et le deuxième test est à une pression de 0,8 bar, la durée de référence pour la détermination du troisième paramètre est de 500 s, l'intervalle cible du premier paramètre est d'au moins 15 %, l'intervalle cible du deuxième paramètre est de 1 à 5 et l'intervalle cible du troisième paramètre est inférieur à 0,8.

L'invention concerne également un semi-produit comprenant des fibres de renfort ayant une orientation essentiellement unidirectionnelle et une résine thermoplastique, le semi-produit satisfaisant à la validation du procédé d'analyse conforme ci-dessus.

Selon certains modes de réalisation, la résine thermoplastique est choisie dans le groupe des polyamides, des polyimides, en particulier les polyétherimides, des polyaryléthercétones, en particulier les polyéthercétones, les polyéthercétonecétones et polyétheréthercétones, du polytéréphtalate d'éthylène, des polyoléfines, en particulier le polypropylène, du polysulfure de phénylène, des polysulfones, des polymères halogénés, en particulier le polychlorure de vinyle et le polyfluorure de vinylidène, des polymères acryliques ou méthacryliques, et est de préférence un polyaryléthercétone tel que le polyéthercétone, le polyéthercétonecétone, le polyétheréthercétone, ou un de leurs copolymères, notamment ceux comprenant des unités étheréthercétones et étherdiphényléthercétones.

Selon certains modes de réalisation, les fibres de renfort sont des fibres de carbone et/ou des fibres de verre.

Selon certains modes de réalisation, la résine thermoplastique a une température de fusion de 250 à 400°C, de préférence de 280 à 380°C, et encore de préférence de 300 à 350°C.

L'invention concerne également un procédé de fabrication d'une pièce composite à partir d'au moins deux semi-produits comme décrits ci-dessus, le procédé comprenant les étapes suivantes :

- la fourniture des semi-produits ;
- l'empilement des semi-produits ;
- le chauffage sous pression des semi-produits à une température supérieure à la température de fusion de la résine, afin de provoquer la fusion de la résine et la consolidation des semi-produits; et
- le refroidissement des semi-produits afin d'obtenir la pièce composite.

Selon certains modes de réalisation, lors de l'empilement des semi-produits les fibres des semi-produits adjacents ont une différence d'orientation de 0 à 90° en valeur absolue.

Selon certains modes de réalisation, les semi-produits sont consolidés hors autoclave.

L'invention concerne également l'utilisation d'un semi-produit comme décrit ci-dessus, pour la fabrication de pièces composites par consolidation hors autoclave.

Il est également décrit une pièce composite obtenue par le procédé ci-dessus.

Selon certains modes de réalisation, la pièce composite comprend de 2 à 150, de préférence de 4 à 40, de préférence encore de 6 à 30, et idéalement de 7 à 25 plis, chaque pli comprenant au moins deux semi-produits disposés de manière adjacente.

Selon certains modes de réalisation, la pièce composite est une pièce d'un engin de locomotion aérien ou spatial, ou une pièce d'une installation de forage, ou une pièce destinée à être positionnée en contact avec ou à proximité d'un moteur de véhicule ou d'un réacteur, ou une pièce destinée à être soumise à une friction.

La présente invention permet de répondre au besoin exprimé dans l'état de la technique. Elle fournit plus particulièrement un procédé d'analyse de semi-produits afin de déterminer ceux pouvant être consolidés de manière efficace pour préparer des matériaux composites de haute qualité. Elle concerne également des semi-produits ayant été validés par ce procédé.

Il a été découvert par les présents inventeurs que la fabrication de matériaux composites de haute qualité dépend fortement des propriétés d'écoulement des semi-produits lors de leur consolidation. L'obtention d'un semi-produit présentant de bonnes propriétés d'écoulement permet une consolidation optimale, et donc la fabrication des pièces composites avec peu de défauts.

Le procédé d'analyse présenté ci-dessus permet de distinguer les semi-produits présentant de bonnes propriétés d'écoulement de ceux ne présentant pas de bonnes propriétés d'écoulement.

### Brève description des figures

**[Fig. 1]** représente la déformation (ou variation d'épaisseur) d'un premier empilement de semi-produits (en ordonnée à gauche, %) et la température (en ordonnée à droite, °C), en fonction du temps (en abscisse, min).

**[Fig. 2]** représente un agrandissement de la **Figure 1.**

**[Fig. 3]** représente le rapport $H(t)/H_0$ (en ordonnée) en fonction du temps (en abscisse, s) pour le premier empilement de semi-produits, $H(t)$ représentant l'épaisseur et $H_0$ représentant l'épaisseur au début de la fusion.

**[Fig. 4]** représente la déformation (ou variation d'épaisseur) d'un deuxième empilement de semi-produits (en ordonnée à gauche, %) et la température (en ordonnée à droite, °C), en fonction du temps (en abscisse, min).

**[Fig. 5]** représente un agrandissement de la **Figure 4.**

**[Fig. 6]** représente le rapport $H(t)/H_0$ (en ordonnée) en fonction du temps (en abscisse, s) pour le deuxième empilement de semi-produits, $H(t)$ représentant l'épaisseur et $H_0$ représentant l'épaisseur au début de la fusion.

**[Fig. 7]** représente la déformation (ou variation d'épaisseur) d'un troisième empilement de semi-produits (en ordonnée à gauche, %) et la température (en ordonnée à droite, °C), en fonction du temps (en abscisse, min).

**[Fig. 8]** représente un agrandissement de la **Figure 7.**

**[Fig. 9]** représente le rapport H(t)/H$_o$ (en ordonnée) en fonction du temps (en abscisse, s) pour le troisième empilement de semi-produits, H(t) représentant l'épaisseur et H$_0$ représentant l'épaisseur au début de la fusion.

**[Fig. 10]** représente la déformation (ou variation d'épaisseur) d'un quatrième empilement de semi-produits (en ordonnée à gauche, %) et la température (en ordonnée à droite, °C), en fonction du temps (en abscisse, min).

**[Fig. 11]** représente un agrandissement de la **Figure 10.**

**[Fig. 12]** représente le rapport H(t)/H$_o$ (en ordonnée) en fonction du temps (en abscisse, s) pour le quatrième empilement de semi-produits, H(t) représentant l'épaisseur et H$_0$ représentant l'épaisseur au début de la fusion.

## Description détaillée

L'invention est maintenant décrite plus en détail et de façon non limitative dans la description qui suit.

Semi-produits

On entend par « *semi-produit* » un produit comprenant une résine et des fibres de renfort, qui est utilisé comme produit intermédiaire dans la fabrication de matériaux composites. Les semi-produits selon l'invention sont des pré-imprégnés (ou tapes) sous forme d'une nappe de fibres dans une matrice de résine. Les fibres de renfort ont une orientation essentiellement unidirectionnelle dans le semi-produit. Cette orientation est due au procédé de fabrication de semi-produits qui comprend une étape de déroulement de bobines de fibres de renfort disposées de manière adjacente les unes aux autres.

La résine du semi-produit est une résine thermoplastique qui peut comprendre un ou plusieurs matériaux thermoplastiques.

Des exemples de matériaux thermoplastiques appropriés pour l'invention sont les polyamides, les polysulfones, le polysulfure de phénylène (PPS), les polyimides, en particulier les polyétherimides (PEI), les polyaryléthercétones (PAEK), en particulier les polyéthercétones (PEK), les polyéthercétonecétones (PEKK) et polyétheréthercétones (PEEK), les polyétheréthercétonecétones (PEEKK), les polyéthercétoneéthercétonecétones (PEKEKK), les polyétheréthercétoneéthercétones (PEEKEK), les polyétheréthercétones (PEEEK), les polyétherdiphényléthercétones (PEDEK), le polytéréphtalate d'éthylène, et leurs copolymères tels que ceux comprenant des unités étheréthercétones et étherdiphényléthercétones (LMPAEK, PEEK-PEDEK), les polyoléfines telles que le polypropylène, les polymères halogénés tels que le polychlorure de vinyle (PVC) et le polyfluorure de vinylidène (PVDF), les polymères acryliques ou méthacryliques. Le matériau thermoplastique peut être un matériau thermoplastique amorphe, cristallin ou semi-cristallin.

Les polyamides peuvent notamment être un polyphtalamide (PPA), du PA 11, du PA 12, du PA 6, du PA 10/10, du PA 6.6, du PA 4.6 ou un copolyamide.

Avantageusement, la résine thermoplastique comprend du PPS, du PEI ou un PAEK tel que le PEK, le PEEK ou le PEKK en tant que matériau thermoplastique. Le PEKK est particulièrement préféré.

Dans certains modes de réalisation, la résine thermoplastique peut avoir une température de fusion Tf de 250 à 400°C, de préférence de 280 à 380°C, et encore de préférence de 300 à 350°C. La température de fusion est mesurée par calorimétrie différentielle à balayage (DSC) selon la norme ISO 11357-3.

Dans certains modes de réalisation, la résine thermoplastique peut avoir une température de cristallisation Tc de 150 à 400°C, de préférence de 200 à 250°C, et encore de préférence de 210 à 250°C. La température de cristallisation est mesurée par calorimétrie différentielle à balayage (DSC) selon la norme ISO 11357-3.

Les fibres de renfort utilisées pour la fabrication des semi-produits peuvent être choisies parmi toutes les fibres susceptibles d'être utilisées comme renfort dans la fabrication de pièces en matériaux composites.

Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide ou des fibres de poly(p-phénylène benzobisoxazole), plus connues sous le sigle PBO, ou encore de fibres de PAEK, ou encore de mélanges de telles fibres.

De préférence, il s'agit de fibres de carbone ou de fibres de verre, et plus particulièrement de fibres de carbone.

Les fibres sont de préférence non ensimées. Lorsqu'elles sont ensimées, l'ensimage est de préférence adapté à la résine, notamment en ce qu'il n'entraîne pas de produits de dégradation néfastes pour la résine.

Tout diamètre de fibres peut convenir. Le diamètre moyen des fibres de renfort peut être notamment de 2 à 20 $\mu$m, de préférence de 4 à 15 $\mu$m, de préférence encore de 6 à 10 $\mu$m.

Dans le semi-produit, l'ensemble des fibres peuvent avoir un poids surfacique de 50 à 1000 g/m$^2$, de préférence de 80 à 500 g/m$^2$, et encore de préférence de 100 à 300 g/m$^2$. Le poids surfacique des fibres est mesuré selon la norme ASTM D3776/D3766 M-09(a)2017 option C.

Les fibres de renfort utilisées sont de préférence continues dans le semi-produit, c'est-à-dire s'étendent essentiellement sur la totalité de la longueur du semi-produit.

En effet, les semi-produits selon l'invention peuvent être fabriqués en déroulant de manière alignée et en mettant sous tension des mèches de fibres initialement enroulées en bobines, disposées de manière adjacente les unes aux autres ; puis en réalisant une imprégnation avec la résine. Et enfin, après imprégnation, un bobinage du semi-produit est réalisé.

Le nombre de mèches disposées de manière adjacente peut être notamment de 1 à 300, de préférence de 20 à 200, de préférence encore de 30 à 100, par exemple d'environ 50. Chaque mèche peut comporter notamment de 1.000 à 50.000 fibres, de préférence de 2.000 à 30.000 fibres, de préférence encore de 5.000 à 20.000 fibres, de préférence encore de 10.000 à 15.000 fibres, par exemple environ 12.000 fibres.

L'imprégnation peut être effectuée par introduction et circulation des fibres de renfort dans un bain de dispersion aqueuse de résine. Les fibres imprégnées de poudre de résine thermoplastique sont ensuite sorties du bain et débarrassées de l'eau, par exemple par séchage dans un four à infra-rouges. Les fibres imprégnées séchées sont ensuite chauffées jusqu'à fusion de la résine thermoplastique, afin de permettre l'enrobage des fibres par la résine. Les fibres enrobées obtenues sont ensuite le cas échéant mises en forme, par exemple par calandrage. Cette étape peut permettre de texturer et d'assurer le dimensionnement du semi-produit.

Alternativement, l'imprégnation peut être effectuée par introduction et circulation des fibres de renfort dans un bain de résine dissoute dans un solvant, puis par séchage, chauffage et calandrage comme décrit ci-dessus.

Alternativement, l'imprégnation peut être effectuée en disposant les fibres de renfort dans un lit fluidisé de poudre de résine, puis par chauffage et calandrage comme décrit ci-dessus.

De préférence, les semi-produits selon l'invention comportent de 30 à 90 % en poids, de préférence de 40 à 80 %, en particulier de 50 à 80 % en poids, et en particulier de 60 à 70 % en poids de fibres de renfort.

De préférence, les semi-produits selon l'invention comportent de 10 à 70 % en poids, de préférence de 20 à 60 %, en particulier de 20 à 50 % en poids, et en particulier de 30 à 40 % en poids de résine. Cette teneur est mesurée selon la norme ASTM D3529.

Les semi-produits de l'invention peuvent également comprendre en outre des charges (autres que les fibres de renfort) et/ou des additifs fonctionnels. Parmi les additifs fonctionnels, on peut notamment inclure un ou des tensioactifs, stabilisants UV, stabilisants thermiques, modifiants choc, agents expansifs et/ou agents biocides.

Les charges peuvent notamment être des charges minérales telles que l'alumine, la silice, le carbonate de calcium, le dioxyde de titane, les billes de verre, le noir de carbone, le graphite le graphène et les nanotubes de carbone.

La quantité totale de charges et additifs est de préférence inférieure ou égale à 5 % en poids, de préférence encore à 2 % en poids, de préférence encore à 1 % en poids dans le semi-produit.

Les additifs et/ou charges, lorsqu'ils sont présents, peuvent être de préférence incorporés lors de l'imprégnation avec la résine.

Ainsi réalisé, le semi-produit peut se présenter de préférence sous la forme d'une bobine, d'un ruban ou d'une nappe de faible épaisseur. L'épaisseur usuelle du semi-produit peut être entre 20 et 1500 μm, de préférence entre 80 et 500 μm, et de préférence encore entre 150 et 300 μm, bornes incluses. La largeur du semi-produit peut être variable, mais en règle générale, elle est comprise entre 0,5 et 50 cm. Le semi-produit peut alors être déroulé et découpé à la longueur souhaitée Cette longueur dépend de la dimension de la pièce composite visée. Disposés de manière adjacente les rubans ou nappes de semi-produit forment des plis. La dépose adjacente des semi-produits est réalisée pour obtenir une largeur de pli souhaitée. Cette largeur dépend de la dimension de la pièce composite visée.

Procédé d'analyse de semi-produits

Le procédé d'analyse de semi-produits permet de distinguer les semi-produits présentant de bonnes propriétés d'écoulement de ceux qui ne présentent pas de bonnes propriétés d'écoulement.

Afin d'obtenir des semi-produits présentant de bonnes propriétés d'écoulement, il est souhaitable que les fibres dans le semi-produit présentent une uniformité de tension qui permet une bonne consolidation du semi-produit. En effet, une différence de tension entre les fibres du semi-produit peut engendrer une différence de relaxation des fibres lors de la fusion de la résine du semi-produit. Cette différence de relaxation peut gêner l'écoulement du semi-produit et donc sa consolidation.

Il est également souhaitable que le semi-produit ne comprenne pas, ou le moins possible, de fibres emmêlées à sa surface, c'est-à-dire des fibres orientées de manière sécante, par exemple perpendiculaire, par rapport à la direction principale des fibres, vu que ces fibres peuvent réduire la mobilité des semi-produits à l'état fondu en diminuant ainsi la capacité des semi-produits à s'écouler.

Il est également souhaitable que les semi-produits présentent une certaine rugosité de surface pour optimiser l'interpénétration des semi-produits entre eux.

Il est également souhaitable de limiter le plus possible les cassures de fibres susceptibles d'intervenir par frottement lors de la fabrication du semi-produit.

La mise en œuvre du procédé d'analyse de l'invention permet d'ajuster les paramètres de fabrication des semi-produits afin d'améliorer leurs propriétés.

Ainsi, ce procédé d'analyse comprend un premier test et un deuxième test. Chaque test est effectué en préparant un empilement d'au moins deux semi-produits identiques, par exemple de deux à vingt, ou de trois à quinze, ou de quatre à dix, ou de cinq à huit. De préférence, chaque test est effectué avec un empilement de six semi-produits.

De manière générale l'empilement de semi-produits (pour les deux tests) est disposé dans un appareillage de test de sorte à pouvoir être chauffé et comprimé. L'appareillage de test comprend deux plateaux de compression (permettant d'exercer une pression donnée sur l'empilement, et dont le déplacement peut être mesuré) et un système de contrôle de la température. Afin d'effectuer une certaine compression sur la surface de l'empilement, une force peut être appliquée, cette force étant choisie simplement pour respecter la relation $F = \sigma \times S$, avec F (en N) la force appliquée, S (en $mm^2$) la surface de l'empilement de semi-produits et $\sigma$ (en MPa) la pression recherchée sur l'empilement.

Le premier test comprend dans un premier temps la préparation d'un empilement d'au moins deux semi-produits identiques, les fibres des semi-produits adjacents ayant une différence d'orientation de 0°.

Le deuxième test comprend quant à lui la préparation d'un empilement d'au moins deux semi-produits identiques, les fibres des semi-produits adjacents ayant une différence d'orientation de 90° environ en valeur absolue.

Les semi-produits étant sous forme de nappe de faible épaisseur, ces nappes sont empilées surface plane contre surface plane. De préférence, les surfaces planes ont des circonférences circulaires ou carrées, et elles sont alignées dans l'empilement.

Les étapes suivantes sont identiques pour le premier et le deuxième test.

L'empilement de semi-produit (du premier test ou du deuxième test) est de préférence comprimé selon une direction de compression orthogonale aux plateaux de l'appareil, c'est-à-dire orthogonale à la surface plane des semi-produits (et donc à l'orientation des fibres des semi-produits) dans l'appareillage ci-dessus (étape de pré-compactage). Cette étape peut être effectuée à température ambiante, c'est à dire à une température de 15 à 30°C, et de préférence à une température de 18 à 25°C, encore de préférence à une température de 23°C pendant une durée de 10 à 60 minutes et de préférence pendant une durée d'environ 30 minutes.

De préférence, l'étape de pré-compactage est effectuée à une pression de 0,5 à 2 bar, de préférence de 0,7 à 1 bar, et encore de préférence à 0,8 bar.

L'empilement de semi-produits (du premier test ou du deuxième test) est ensuite chauffé à une température supérieure à la température de fusion de la résine puis refroidi à une température inférieure à la température de fusion de la résine, en comprimant l'empilement (comme détaillé ci-dessus).

Plus précisément, pendant l'étape de chauffage de l'empilement de semi-produits, la température augmente jusqu'à une température maximale (Tmax), supérieure à la température de fusion de la résine, puis reste constante pendant une certaine durée.

La température peut de préférence augmenter jusqu'à la température maximale à taux constant.

Ainsi, la température augmente jusqu'à la température maximale de préférence avec un taux de 1 à 10°C par minute, et de préférence de 2 à 8°C par minute, et par exemple de 5°C par minute.

La durée pendant laquelle la température augmente (à partir de la température ambiante) afin d'atteindre la température maximale peut être de 45 à 90 min, et de préférence de 50 à 75 minutes. Dans certains modes de réalisation, la durée pendant laquelle la température augmente afin d'atteindre la température maximale peut être de 45 à 50 minutes ; ou de 50 à 55 minutes ; ou de 55 à 60 minutes ; ou de 60 à 65 minutes ; ou de 65 à 70 minutes ; ou de 70 à 75 minutes ; ou de 75 à 80 minutes ; ou de 80 à 85 minutes ; ou de 85 à 90 minutes.

La température maximale est de préférence fixée à une valeur qui est de 5 à 60°C supérieure à la température de fusion de la résine, de préférence de 10 à 50°C supérieure à la température de fusion de la résine, de préférence de 20 à 40°C supérieure à la température de fusion de la résine, et par exemple supérieure de 35°C à la température de fusion de la résine.

La température maximale peut être, selon les cas, de 300 à 450°C, de préférence de 320 à 400°C, et par exemple de 375°C. Dans certains modes de réalisation, la température maximale de chauffage peut être de 300 à 320°C ; ou de 320 à 340°C ; ou de 340 à 360°C ; ou de 360 à 380°C ; ou de 380 à 400°C ; ou de 400 à 420°C ; ou de 420 à 450°C.

La durée pendant laquelle la température reste constante à cette température maximale est de préférence de 5 à 30 minutes, de préférence encore de 10 à 20 minutes, et par exemple de 15 minutes. Dans certains modes de réalisation, la durée pendant laquelle la température reste constante peut être de 5 à 10 minutes ; ou de 10 à 15 minutes ; ou de 15 à 20 minutes ; ou de 20 à 25 minutes ; ou de 25 à 30 minutes.

Après l'étape de chauffage, la température est diminuée à une température inférieure à la température de cristallisation de la résine, et de préférence jusqu'à la température ambiante.

La température peut de préférence diminuer à partir de la température maximale à taux constant.

Ainsi, la température diminue de préférence avec un taux de 1 à 10°C par minute, de préférence encore de 2 à 8°C par minute, et par exemple de 5°C par minute.

La durée pendant laquelle la température diminue peut être notamment de 50 à 100 minutes, et de préférence de 60 à 80 minutes.

L'application de la pression pendant les étapes de chauffage et de refroidissement de l'empilement de semi-produits a comme résultat une réduction de l'épaisseur de l'empilement selon la direction de compression au cours du temps.

De préférence, la compression est maintenue pendant toute la durée du test à une valeur constante.

De préférence, la compression est maintenue pendant toute la durée du test à une pression de 0,5 à 2 bar, de préférence de 0,7 à 1 bar, et encore de préférence à 0,8 bar.

Le premier et le deuxième test comprennent également la mesure de l'épaisseur de l'empilement selon la direction de compression au cours du temps. Cette épaisseur de l'empilement selon la direction de compression au cours du temps est désignée par « *H(t)* ».

Le premier et le deuxième test comprennent également une étape de détermination de la viscosité homogène équivalente de l'empilement à partir de la mesure de l'épaisseur de l'empilement au cours du temps H(t). Cette viscosité est calculée à partir de ces mesures en utilisant un modèle basé sur l'équation de Stefan corrigée, comme détaillé ci-dessous.

Tout d'abord, on détermine la température ($T_{onset}$) de début de la fusion de l'empilement de semi-produits dans le test (au cours du chauffage). Cette température est déterminée comme étant celle à laquelle le paramètre H(t) présente un maximum local. On entend par un maximum local désigner un maximum situé dans l'intervalle de température d'intérêt, à savoir notamment l'intervalle compris entre la température de transition vitreuse et 30°C au-dessus de la température de fusion (Tf+30°C). On désigne par $H_0$ l'épaisseur de l'empilement à l'instant où cette température $T_{onset}$ est atteinte lors du chauffage.

Puis, on utilise l'équation de Stefan :

[Math 1]

$$\left(\frac{H(t)}{H_0}\right)_{Stefan} = \left[1 + \frac{4}{3}\frac{FH_0{}^2}{\pi R^4}\frac{t}{\eta}\right]^{-1/2}$$

dans laquelle F est la force de la compression appliquée, R est le rayon de la surface circulaire de l'empilement de semi-produits ou le rayon du cercle inscrit dans la surface carrée de l'empilement se semi-produits, $H_0$ est tel que défini ci-dessus, et $\eta$ est la viscosité homogène équivalente de l'empilement de semi-produits.

Etant donné que cette équation n'est pas adaptée aux matériaux anisotropes, il faut réaliser une correction afin de prendre en compte le compactage maximal de l'empilement. Pour ceci, on réalise une transformation linéaire des données selon l'équation suivante :

[Math 2]

$$\left(\frac{H(t)}{H_0}\right)_{corr} = \frac{\left(\frac{H(t)}{H_0}\right)_{Stefan} - 1}{-1} \times \left(\left(\left(\frac{H(t)}{H_0}\right)_{exp}\right)_{T=23°C} - 1\right) + 1$$

Le facteur $((H(t)/H_0)_{exp})_{T=23°C}$ représente le rapport $(H(t)/H_o)_{exp}$ (issu de la mesure) à température ambiante (par exemple T=23°C), après la fin de la compression de l'empilement de semi-produits.

Ainsi, en comparant $(H(t)/H_o)_{corr}$ et $(H(t)/H_o)_{exp}$ et en effectuant un ajustement de la courbe théorique $(H(t)/H_o)_{corr}$ à la courbe expérimentale $(H(t)/H_o)_{exp}$, on détermine la valeur de viscosité homogène équivalente de l'empilement de semi-produits $\eta$ donnant l'ajustement optimal. Cet ajustement peut être donné par une boucle classique d'optimisation par la méthode des moindres carrés.

Le procédé d'analyse selon l'invention comprend en outre la détermination de trois paramètres distincts.

Le premier paramètre correspond à la réduction d'épaisseur totale de l'empilement des semi-produits au cours du premier test.

La réduction d'épaisseur de l'empilement de semi-produits est ici appelée « *déformation* ».

Dans un premier temps, la déformation de l'empilement de semi-produits au cours du temps ($\varepsilon(t)$) est calculée à partir des mesures d'épaisseur, selon la relation suivante :

[Math 3]

$$\epsilon(t) = \frac{H(t)}{H_{30min}} \times 100$$

$H_{30min}$, correspond à l'épaisseur de l'empilement de semi-produits après l'étape de pré-compactage (c'est-à-dire avant l'étape de chauffage de l'empilement).

Le deuxième paramètre correspond au rapport de la viscosité homogène équivalente de l'empilement des semi-produits du deuxième test sur la viscosité homogène équivalente de l'empilement des semi-produits du premier test. Les viscosités homogènes équivalentes de l'empilement des semi-produits du premier et du deuxième test sont calculées comme détaillé ci-dessus.

Le troisième paramètre qui est déterminé correspond au rapport de l'épaisseur de l'empilement des semi-produits du premier test au bout d'une durée de référence à partir de l'instant, au cours de l'étape de chauffage, du début de fusion de l'empilement des semi-produits (c'est-à-dire au bout d'une durée de référence à partir la température $T_{onset}$), sur l'épaisseur de l'empilement des semi-produits du premier test à l'instant, au cours de l'étape de chauffage, du début de fusion de l'empilement des semi-produits (c'est-à-dire à la température $T_{onset}$).

Selon certains modes de réalisation, cette durée de référence peut être de 1 à 5000 s, de préférence de 60 à 1000 s et encore de préférence de 500 s.

Lors de la mise en œuvre du test de consolidation, on observe généralement :

- avant que la température atteigne la température de fusion de la résine, des variations de l'épaisseur de l'empilement ; ces variations peuvent notamment inclure une chute relativement rapide de l'épaisseur si / lorsque la température atteint la température de transition vitreuse de la résine (due notamment au fluage solide ), ainsi qu'une augmentation modérée de l'épaisseur due à la dilatation thermique des composés ;
- à partir du moment où la température atteint la température de fusion de la résine, une chute rapide de l'épaisseur ;
- puis une chute plus lente de l'épaisseur ;
- et enfin une stabilisation de l'épaisseur jusqu'à ce qu'elle reste essentiellement constante (et égale à l'épaisseur finale).

De plus, le procédé d'analyse selon l'invention peut comprendre une étape de validation de l'empilement des semi-produits. Ceci permet d'identifier des semi-produits ayant des bonnes propriétés d'écoulement. Plus particulièrement, cette étape de validation permet de déterminer si, pour un empilement de semi-produits, le premier paramètre, le deuxième paramètre et le troisième paramètre (telles que déterminés et détaillés ci-dessus) ont des valeurs comprises dans des intervalles cibles respectifs.

Pour le premier paramètre, l'intervalle cible peut être d'au moins 15 %. En d'autres termes, la réduction d'épaisseur totale de l'empilement des semi-produits au cours du premier test peut être d'au moins 15 %. Ainsi, la réduction d'épaisseur totale est de 15 à 100 %, et de préférence de 20 à 80 %, voire de 30 à 60 %.

Pour le deuxième paramètre, l'intervalle cible peut être de 1 à 5. En d'autres termes, le rapport de la viscosité homogène équivalente de l'empilement des semi-produits du deuxième test sur la viscosité homogène équivalente de l'empilement des semi-produits du premier test peut être de 1 à 5. Ainsi ce rapport peut être de préférence de 1,5 à 4,5, de préférence encore de 2 à 4.

Pour le troisième paramètre, l'intervalle cible peut être inférieur à 0,8. En d'autres termes, le rapport de l'épaisseur de l'empilement des semi-produits du premier test au bout de la durée de référence à partir la température $T_{onset}$, sur l'épaisseur de l'empilement des semi-produits du premier test à la température $T_{onset}$ peut être inférieur à 0,8. Ainsi, le rapport d'épaisseur de l'empilement des semi-produits est inférieur à 0,8, de préférence inférieur à 0,7, de préférence inférieur à 0,8, de préférence encore inférieur à 0,6, de préférence encore inférieur à 0,5, de préférence encore inférieur à 0,4, de préférence encore inférieur à 0,3, de préférence encore inférieur à 0,2, et encore de préférence inférieur à 0,1.

Ainsi, les semi-produits ayant des bonnes propriétés d'écoulement présentent, lors la mise en œuvre du procédé d'analyse présenté ci-dessus (lorsque la compression dans le premier test et le deuxième test est à une pression de 0,8 bar et la durée de référence pour la détermination du troisième paramètre est de 500 s), les trois caractéristiques suivantes :

- une réduction d'épaisseur totale de l'empilement des semi-produits au cours du premier test d'au moins 15 %,
- un rapport de la viscosité homogène équivalente de l'empilement des semi-produits du deuxième test sur la viscosité homogène équivalente de l'empilement des semi-produits du premier test de 1 à 5, et
- un rapport de l'épaisseur de l'empilement des semi-produits du premier test au bout de la durée de référence à partir de la température $T_{onset}$, sur l'épaisseur de l'empilement des semi-produits du premier test à la température $T_{onset}$

inférieur à 0,8.

La déformation (ou réduction d'épaisseur) totale correspond à la variation entre l'épaisseur au moment de la compression de l'empilement, et l'épaisseur finale (stabilisée). Le premier critère énoncé ci-dessus signifie donc que le semi-produit présente des propriétés d'écoulement lors de la fusion lui permettant une interpénétration satisfaisante avec d'autres semi-produits adjacents dont les fibres peuvent facilement s'organiser les unes par rapport aux autres parce qu'elles sont orientées dans la même direction.

Le rapport des viscosités homogènes équivalentes représente l'atténuation qu'il existe entre un empilement de semi-produits dont les fibres sont orientées dans la même direction et qui peuvent alors s'interpénétrer facilement et un empilement de semi-produits dont les fibres ne sont pas orientées dans la même direction et ne peuvent donc pas s'interpénétrer facilement. Le second critère énoncé ci-dessus caractérise donc une atténuation des phénomènes d'écoulement qu'on attribue à des phénomènes dissipatifs de frottements entre les fibres.

Enfin, le rapport de l'épaisseur de l'empilement des semi-produits du premier test au bout de la durée de référence à partir de la température $T_{onset}$, sur l'épaisseur de l'empilement des semi-produits du premier test à la température $T_{onset}$ représente une cinétique liée à l'écoulement du semi-produit. Le troisième critère énoncé ci-dessus caractérise ainsi une vitesse à laquelle les écoulements s'effectuent.

Procédé de fabrication de pièces composites

Le procédé selon l'invention comprend les étapes suivantes :

- la fourniture d'au moins deux semi-produits ; les semi-produits remplissant les caractéristiques du test de consolidation décrit ci-dessus ;
- l'empilement des semi-produits ;
- le chauffage sous pression des semi-produits à une température supérieure à la température de fusion de la résine, afin de provoquer la fusion de la résine et la consolidation des semi-produits ; et
- le refroidissement des semi-produits afin d'obtenir la pièce composite, de préférence également sous pression.

Comme décrit ci-dessus, les semi-produits peuvent être disposés de manière adjacente afin de former des plis d'une largeur souhaitée. Ainsi, le nombre de plis dans une pièce composite peut varier de 2 à 150 plis, de préférence de 4 à 40, de préférence encore de 6 à 30, idéalement de 7 à 25. Par exemple, une pièce composite peut comprendre de 2 à 10 ; ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90 ; ou de 90 à 100 ; ou de 100 à 110; ou de 110 à 120 ; ou de 120 à 130 ; ou de 130 à 140 ; ou de 140 à 150 plis.

Les fibres de renfort ont une orientation essentiellement unidirectionnelle dans chaque semi-produit. L'orientation unidirectionnelle des fibres de renfort peut être la même d'un semi-produit à l'autre, c'est-à-dire que deux semi-produits adjacents présentent des orientations unidirectionnelles de fibres de renfort qui forment essentiellement un angle de 0° l'un par rapport à l'autre. Ainsi, au sein d'un pli, l'orientation des fibres de renfort est essentiellement unidirectionnelle. De préférence toutefois, l'orientation unidirectionnelle des fibres de renfort diffère d'un pli à l'autre. De préférence encore, deux plis adjacents présentent des orientations unidirectionnelles de fibres de renfort qui forment essentiellement un angle d'environ 90° l'un par rapport à l'autre ; ou qui forment essentiellement un angle d'environ 45° l'un par rapport à l'autre ; ces angles étant donnés en valeur absolue.

Dans certains modes de réalisation, deux plis adjacents peuvent présenter des orientations unidirectionnelles de fibres de renfort qui forment essentiellement un angle de 0 à 20° ; ou de 20 à 45° ; ou de 45 à 60° ; ou de 60 à 90° l'un par rapport à l'autre, en valeur absolue.

Le matériau thermoplastique peut être identique ou différent d'un semi-produit à l'autre d'une pièce composite. De préférence, le matériau thermoplastique est de même nature (par exemple du PEK ou du PEKK ou du PEEK ou du PPS) dans l'ensemble des semi-produits de la pièce composite. Il peut éventuellement comporter un grade différent d'un semi-produit à l'autre, par exemple une viscosité différente, un poids moléculaire différent ou une température de fusion différente. Alternativement, le grade du matériau thermoplastique est le même dans l'ensemble des semi-produits de la pièce composite.

Les semi-produits peuvent notamment être empilés par exemple par placement ou drapage des semi-produits dans un moule.

Dans certains modes de réalisation, le chauffage sous pression des semi-produits peut être effectué dans un autoclave afin de consolider par fusion les semi-produits.

La pression appliquée dans l'autoclave peut être de 5 à 9 bar et de préférence de 7 à 8 bar. Ainsi, la pression appliquée dans l'autoclave peut notamment être de 5 à 5,5 bar ; ou de 5,5 à 6 bar ; ou de 6 à 6,5 bar ; ou de 6,5 à 7 bar; ou de 7 à 7,5 bar ; ou de 7,5 à 8 bar; ou de 8 à 8,5 bar ; ou de 8,5 à 9 bar.

Dans d'autres modes de réalisation avantageux, les semi-produits peuvent être consolidés hors autoclave, par exemple sous bâche à vide placée dans une étuve. Un tel équipement est plus économique qu'un autoclave, et donc avantageux à utiliser. Toutefois, il permet un niveau de compression plus faible qu'un autoclave. Les semi-produits selon l'invention sont donc particulièrement avantageux du fait que leurs bonnes propriétés d'écoulement leur permettent d'être consolidés dans un tel équipement économique sans altérer les propriétés mécaniques des pièces composites obtenues.

La pression appliquée dans la bâche à vide peut être de 50 à 900 mbar et de préférence de 100 à 300 mbar. Ainsi, la pression appliquée dans la bâche à vide peut notamment être de 50 à 100 mbar ; ou de 100 à 150 mbar ; ou de 150 à 200 mbar ; ou de 200 à 250 mbar ; ou de 250 à 300 mbar ; ou de 300 à 400 mbar ; ou de 400 à 600 mbar ; ou de 600 à 900 mbar. Ainsi la pression appliquée sur l'empilement de semi-produits est la différence entre la pression atmosphérique et la pression appliquée sous la bâche à vide.

Pendant l'étape de chauffage sous pression, la température peut augmenter jusqu'à une température maximale, supérieure à la température de fusion de la résine thermoplastique, puis rester constante.

Le chauffage sous pression des semi-produits est suivi par leur refroidissement afin de solidifier la pièce composite. Ainsi, la température est diminuée à une température inférieure à la température de fusion de la résine.

La température maximale est de préférence fixée à une valeur qui est de 5 à 50°C supérieure à la température de fusion de la résine, de préférence de 10 à 40°C supérieure à la température de fusion de la résine, de préférence de 20 à 30°C supérieure à la température de fusion de la résine, et par exemple supérieure de 25°C à la température de fusion de la résine.

La température maximale peut être, selon les cas, de 300 et 450°C, de préférence de 350 à 400°C, et par exemple de 375°C. Dans certains modes de réalisation, la température maximale de chauffage peut être de 300 à 320°C ; ou de 320 à 340°C ; ou de 340 à 360°C ; ou de 360 à 380°C ; ou de 380 à 400°C ; ou de 400 à 420°C ; ou de 420 à 450°C.

Dans les procédés de fabrication des pièces composites, les semi-produits peuvent être soumis à différents cycles thermiques sous pression afin de les assembler entre eux pour former la pièce composite et/ou de la mettre en forme.

Les pièces composites ainsi fabriquées peuvent être transformées davantage, afin d'obtenir des assemblages de pièces composites complexes. Ainsi, il est possible de co-consolider des pièces composites, procédé généralement réalisé en autoclave au moyen d'un nouveau cycle thermique, ou de venir souder des pièces les unes aux autres par échauffement local.

Les pièces composites fabriquées peuvent avoir une épaisseur de 0,1 à 40 mm, de préférence de 1 à 20 mm, et encore de préférence de 2 à 10 mm. Cette épaisseur est mesurée selon la norme ASTM D3171.

Les pièces composites peuvent présenter une porosité égale ou inférieure à 5 %, de préférence égale ou inférieure à 4 %, de préférence encore égale ou inférieure à 3 %, plus préférentiellement égale ou inférieure à 2 %, et encore plus préférentiellement égale ou inférieure à 1 %. Cette porosité est mesurée selon la norme ISO2283.

Les pièces composites qui sont obtenues avec le procédé selon l'invention peuvent être des pièces d'engin de locomotion aérien ou spatial, ou des pièces d'installation de forage (pour les champs d'hydrocarbures), ou toute pièce située en contact ou en proximité d'un moteur (par exemple d'un moteur de véhicule maritime, terrestre ou aérien) ou d'un réacteur, et notamment des joints, connecteurs, gaines et pièces structurales. Il peut également s'agir de pièces destinées à être soumises à une friction, c'est-à-dire de pièces en contact mobile avec une ou plusieurs surfaces, en utilisation. De telles pièces peuvent notamment être des supports, des bagues, des sièges de soupapes, des engrenages, des pistons, des bagues de pistons, des guides de soupapes, des pales de compresseurs, des joints et des composants de moteurs.

EXEMPLES

Les exemples suivants illustrent l'invention sans la limiter.

Le procédé d'analyse décrit ci-dessus a été appliqué à quatre empilements de semi-produits différents (exemples 1 à 4).

Dans les quatre exemples, les semi-produits étaient des nappes carrées de 11 mm x 11 mm.

Dans tous les cas, six semi-produits ont été utilisés pour former un empilement.

La consolidation de l'empilement a été effectuée avec un appareil d'analyse mécanique dynamique (appareil Q800 de TA).

Un montage de compression (constitué d'un plateau cylindrique supérieur de diamètre de 12,6 mm et d'un plateau cylindrique inférieur de diamètre supérieur à 12,6 mm) a été utilisé afin d'apporter une force de compaction de 10 N nécessaire à la consolidation. Ainsi, la section du plateau de compression supérieur donnait une pression de l'ordre de 0,8 bar. Couplé à cette force de fluage constante, un cycle thermique a été appliqué à l'échantillon à l'aide du four de l'appareil d'analyse mécanique dynamique :

- Isotherme à 23°C pendant 30 min (pré-compactage) ;
- Augmentation de la température de 23°C à Tmax à 5°C/min. La température maximale Tmax est supérieure de 35°C de la température de fusion Tf de la résine ;

- Isotherme à Tmax pendant 15 min ;
- Refroidissement de la Tmax à 23°C à 5°C/min.

Sous ces conditions, un premier test a été effectué avec un empilement des six semi-produits, les fibres des semi-produits adjacents ayant une différence d'orientation de 0° (même orientation). L'épaisseur de l'empilement H au cours du temps (H(t)) ainsi que la température ont été enregistrés. De plus, la viscosité homogène équivalente a été calculée en utilisant la méthodologie décrite ci-dessus.

De plus, sous ces conditions, un deuxième test a été effectué avec un empilement des six semi-produits, les fibres des semi-produits adjacents ayant une différence d'orientation de 90°. L'épaisseur de l'empilement H au cours du temps (H(t)) ainsi que la température ont également été enregistrés. De plus, la viscosité homogène équivalente a été calculée en utilisant les équations décrites ci-dessus.

Exemple 1

Dans ce premier exemple, les semi-produits comprennent une résine de polyéthercétonecétone (PEKK) et des fibres de carbone.

Ces semi-produits sont obtenus par introduction et circulation des fibres de renfort (HexTow® AS4 commercialisées par HEXCEL) dans un bain de dispersion aqueuse comprenant 4 à 10 % de résine PEKK (Kepstan 7002, PT 20 microns commercialisée par ARKEMA France) sous forme de poudre ainsi que 2 % par rapport à la masse de PEKK de dioctyl sulfosuccinate de sodium. Les fibres imprégnées de résine sont ensuite sorties du bain et débarrassées de l'eau par séchage dans un four à infra-rouges. Les fibres imprégnées séchées sont ensuite chauffées jusqu'à fusion de la résine, afin de permettre l'enrobage des fibres par la résine. Les fibres enrobées obtenues sont ensuite mises en forme par calandrage, afin de produire un semi-produit ayant une épaisseur de 150 $\mu$m et coupées à une largeur de 300 mm.

Le taux massique de résine dans le semi-produit est de l'ordre de 34 % et le grammage de fibres de carbone est de l'ordre de 145 g/m$^2$.

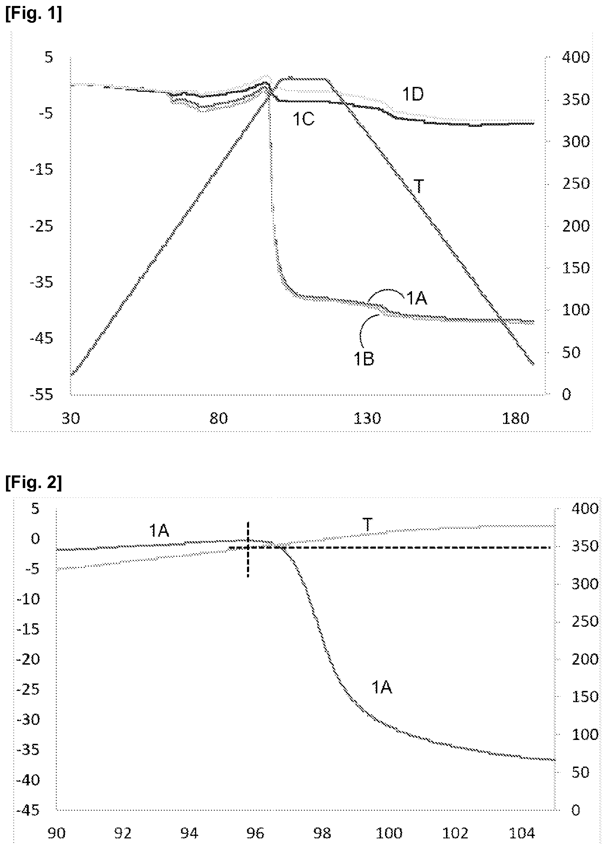

La courbe de déformation en fonction du temps de deux empilements selon le premier test (1A et 1B) et de deux empilements selon le deuxième test (1C et 1D) est illustrée à la **figure 1.** La courbe illustre également la température (T) en fonction du temps. La déformation (%) est illustrée en ordonnée (à gauche) et la température (°C) est illustrée en ordonnée (à droite). Le temps (min) est illustré en abscisse. Cette courbe illustre une déformation de chaque empilement du premier test (1A et 1B) de 35 à 45 % (ce qui est dans l'intervalle cible du premier paramètre).

Ensuite, de la courbe de la **figure 1,** la température $T_{onset}$ est déterminée à 347°C à partir de la position du maximum local de l'épaisseur de l'empilement. Cela est mieux illustré sur la **figure 2** qui constitue un agrandissement de la **figure 1.**

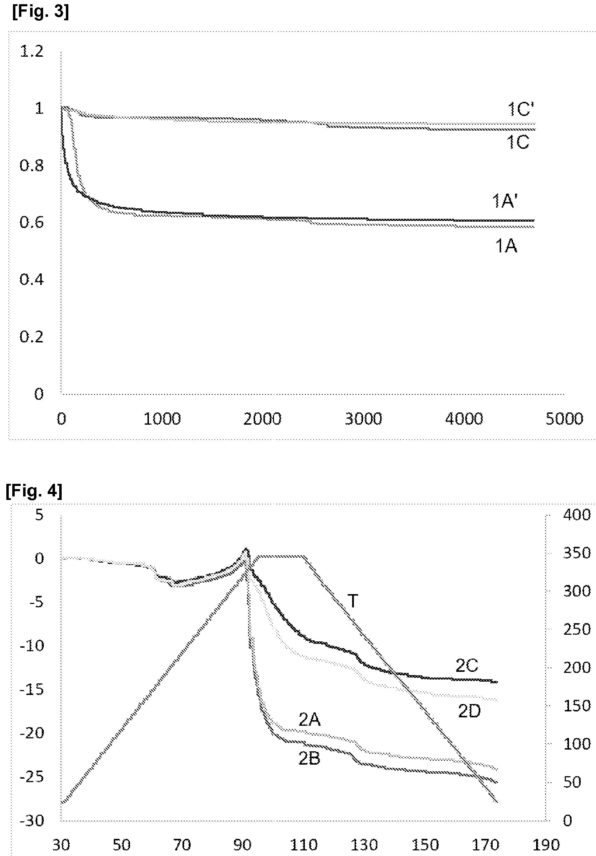

Les courbes expérimentales (1A, 1C) et calculées (1A', 1C') du rapport $H(t)/H_o$ (en ordonnée) en fonction du temps (en abscisse) sont illustrées sur la **figure 3.** Les courbes calculées correspondent à la fonction $(H(t)/H_o)_{corr}$ décrite ci-dessus, pour laquelle l'ajustement aux courbes expérimentales est le meilleur. Cela permet de déterminer le paramètre de viscosité homogène équivalente $\eta$.

Le rapport $H(t)/H_o$ de l'empilement de semi-produits selon le premier test à 500 secondes de la $T_{onset}$ est de 0,64. Cette valeur est inférieure à 0,8 ce qui est dans l'intervalle cible du troisième paramètre.

Enfin, le rapport de la viscosité homogène équivalente de l'empilement des semi-produits du deuxième test sur la viscosité homogène équivalente de l'empilement des semi-produits du premier test est 14, ce qui est hors l'intervalle cible du deuxième paramètre.

Par conséquent, ce semi-produit ne remplit pas les trois paramètres pour avoir des bonnes propriétés d'écoulement (le deuxième paramètre n'étant pas dans l'intervalle cible).

Exemple 2

Dans ce deuxième exemple, les semi-produits comprennent une résine d'un copolymère comprenant des unités étheréthercétones et étherdiphényléthercétones (LM PAEK) et des fibres de carbone.

Ces semi-produits sont obtenus par introduction et circulation des fibres de renfort (HexTow® AS4 commercialisées par HEXCEL) dans un bain de dispersion aqueuse comprenant 5 à 10 % de résine LM PAEK (commercialisée par VICTREX) sous forme de poudre ainsi que 2 % en poids (par rapport à la masse de LM PAEK) de dioctyl sulfosuccinate de sodium. Les fibres imprégnées de résine sont ensuite sorties du bain et débarrassées de l'eau par séchage dans un four à infra-rouges. Les fibres imprégnées séchées sont ensuite chauffées jusqu'à fusion de la résine, afin de permettre l'enrobage des fibres par la résine. Les fibres enrobées obtenues sont ensuite mises en forme par calandrage, afin de produire un semi-produit ayant une épaisseur de 150 $\mu$m et coupées à une largeur de 100 mm.

Le taux massique de résine dans le semi-produit est de l'ordre de 34 % et le grammage de fibres de carbone est de l'ordre de 145 g/m

La courbe de déformation en fonction du temps de deux empilements selon le premier test (2A et 2B) et de deux empilements selon le deuxième test (2C et 2D) est illustrée à la **figure 4.** La courbe illustre également la température (T) en fonction du temps. La déformation (%) est illustrée en ordonnée (à gauche) et la température (°C) est illustrée en ordonnée (à droite). Le temps (min) est illustré en abscisse. Cette courbe illustre une déformation de chaque empilement du premier test (2A et 2B) de 20 à 25 % (ce qui est dans l'intervalle cible du premier paramètre).

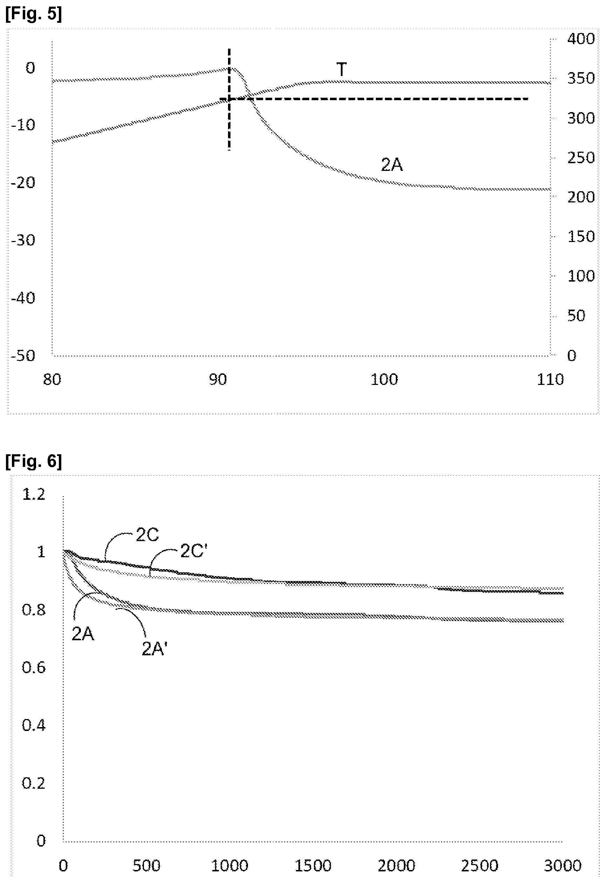

Ensuite, de la courbe de la **figure 4,** la température $T_{onset}$ est déterminée à 323°C à partir de la position du maximum local de l'épaisseur de l'empilement. Cela est mieux illustré sur la **figure 5** qui constitue un agrandissement de la **figure 4.**

Les courbes expérimentales (2A, 2C) et calculées (2A', 2C') du rapport $H(t)/H_o$ (en ordonnée) en fonction du temps sont illustrées sur la **figure 6.** Les courbes calculées correspondent à la fonction $(H(t)/H_o)_{corr}$ décrite ci-dessus, pour laquelle l'ajustement aux courbes expérimentales est le meilleur. Cela permet de déterminer le paramètre de viscosité homogène équivalente $\eta$.

Le rapport $H(t)/H_o$ de l'empilement de semi-produits selon le premier test à 500 secondes de la $T_{onset}$ est de 0,81. Cette valeur est supérieure à 0,8, ce qui est hors l'intervalle cible du troisième paramètre.

Enfin, le rapport de la viscosité homogène équivalente de l'empilement des semi-produits du deuxième test sur la viscosité homogène équivalente de l'empilement des semi-produits du premier test est 5, ce qui est dans l'intervalle cible du deuxième paramètre.

Par conséquent, ce semi-produit ne remplit pas les trois paramètres pour avoir des bonnes propriétés d'écoulement (le troisième paramètre n'étant pas dans l'intervalle cible).

Exemple 3

Dans ce troisième exemple, les semi-produits comprennent une résine de polyéthercétonecétone (PEKK) et des fibres de carbone.

Ces semi-produits sont obtenus par introduction et circulation des fibres de renfort (HexTow® ASD4 commercialisées par HEXCEL) dans un bain de dispersion aqueuse comprenant 5 à 10 % de résine PEKK (Kepstan 7003, PT 20 microns commercialisé par ARKEMA France) sous forme de poudre ainsi que 2 % en poids (par rapport à la masse de PEKK) de dioctyl sulfosuccinate de sodium. Les fibres imprégnées de résine sont ensuite sorties du bain et débarrassées de l'eau par séchage dans un four à infra-rouges. Les fibres imprégnées séchées sont ensuite chauffées jusqu'à fusion de la résine, afin de permettre l'enrobage des fibres par la résine. Les fibres enrobées obtenues sont ensuite mises en forme par calandrage, afin de produire un semi-produit ayant une épaisseur de 250 $\mu$m et coupées à une largeur de 300 mm.

Le taux massique de résine dans le semi-produit est de l'ordre de 34 % et le grammage de fibres de carbone est de l'ordre de 194 g/m$^2$.

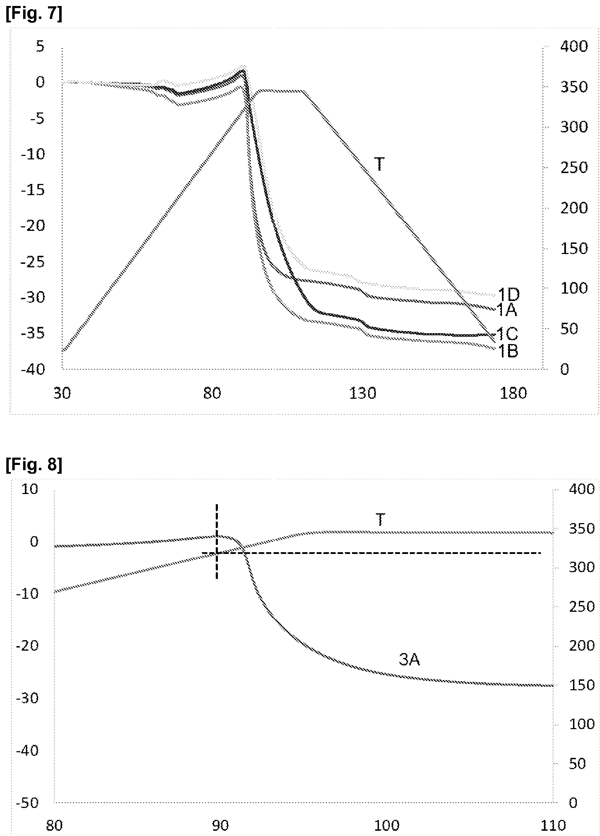

La courbe de déformation en fonction du temps de deux empilements selon le premier test (3A et 3B) et de deux empilements selon le deuxième test (3C et 3D) est illustrée à la **figure 7.** La courbe illustre également la température (T) en fonction du temps. La déformation (%) est illustrée en ordonnée (à gauche) et la température (°C) est illustrée en ordonnée (à droit). Le temps (min) est illustré en abscisse. Cette courbe illustre une déformation de chaque empilement du premier test (3A et 3B) de 30 à 40 % (ce qui est dans l'intervalle cible du premier paramètre).

Ensuite, de la courbe de la **figure 7,** la température $T_{onset}$ est déterminée à 320°C à partir de la position du maximum local de l'épaisseur de l'empilement. Cela est mieux illustré sur la **figure 8** qui constitue un agrandissement de la **figure 7.**

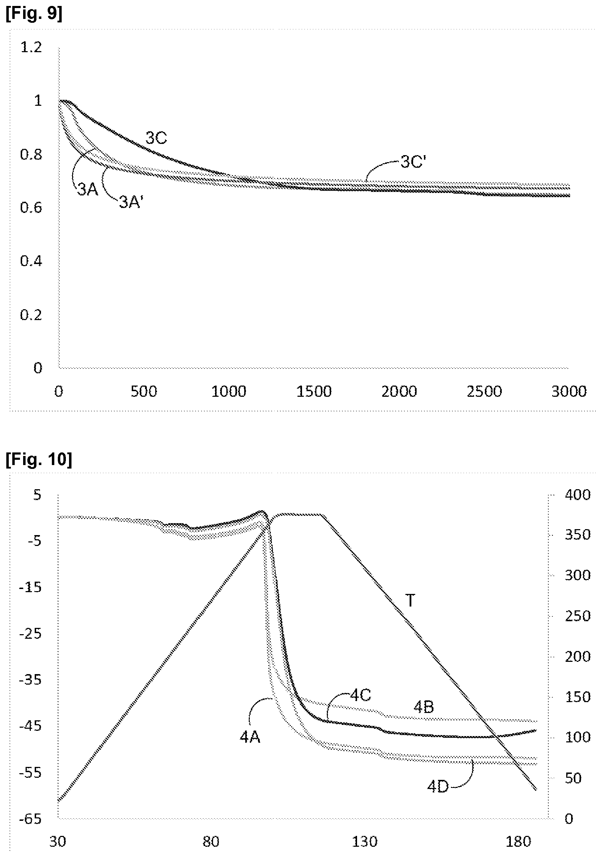

Les courbes expérimentales (3A, 3C) et calculées (3A', 3C') du rapport $H(t)/H_o$ (en ordonnée) en fonction du temps sont illustrées sur la **figure 9.** Les courbes calculées correspondent à la fonction $(H(t)/H_o)_{corr}$ décrite ci-dessus, pour laquelle l'ajustement aux courbes expérimentales est le meilleur. Cela permet de déterminer le paramètre de viscosité homogène équivalente $\eta$.

Le rapport $H(t)/H_o$ de l'empilement de semi-produits selon le premier test à 500 secondes de la $T_{onset}$ est 0,75. Cette valeur est inférieure à 0,8, ce qui est dans l'intervalle cible du troisième paramètre.

Enfin, le rapport de la viscosité homogène équivalente de l'empilement des semi-produits du deuxième test sur la viscosité homogène équivalente de l'empilement des semi-produits du premier test est 2, ce qui est dans l'intervalle cible du deuxième paramètre.

Par conséquent, ce semi-produit remplit les trois paramètres pour avoir des bonnes propriétés d'écoulement.

Exemple 4

Dans ce quatrième exemple, les semi-produits comprennent une résine d'un copolymère comprenant des unités étheréthercétones et étherdiphényléthercétones (LM PAEK) et des fibres de carbone. Ces semi-produits sont obtenus par introduction et circulation des fibres de renfort (T700 commercialisées par TORAY) dans un bain de dispersion aqueuse comprenant 5 à 10 % de résine LM PAEK (commercialisée par VICTREX) sous forme de poudre ainsi que 2 % en poids (par rapport à la masse de LM PAEK) de dioctyl sulfosuccinate de sodium. Les fibres imprégnées de résine sont ensuite sorties du bain et débarrassées de l'eau par séchage dans un four à infra-rouges. Les fibres imprégnées séchées sont ensuite chauffées jusqu'à fusion de la résine, afin de permettre l'enrobage des fibres par la résine. Les fibres enrobées obtenues sont ensuite mises en forme par calandrage, afin de produire un semi-produit ayant une épaisseur de 150 $\mu$m et coupées à une largeur de 150 mm.

Le taux massique de résine dans le semi-produit est de l'ordre de 34 % et le grammage de fibres de carbone est de l'ordre de 145 g/m$^2$.

La courbe de déformation en fonction du temps de deux empilements selon le premier test (4A et 4B) et de deux empilements selon le deuxième test (4C et 4D) est illustrée à la **figure 10.** La courbe illustre également la température (T) en fonction du temps. La déformation (%) est illustrée en ordonnée (à gauche) et la température (°C) est illustrée en ordonnée (à droit). Le temps (min) est illustré en abscisse. Cette courbe illustre une déformation de chaque empilement du premier test (4A et 4B) de 40 à 55 % (ce qui est dans l'intervalle cible du premier paramètre).

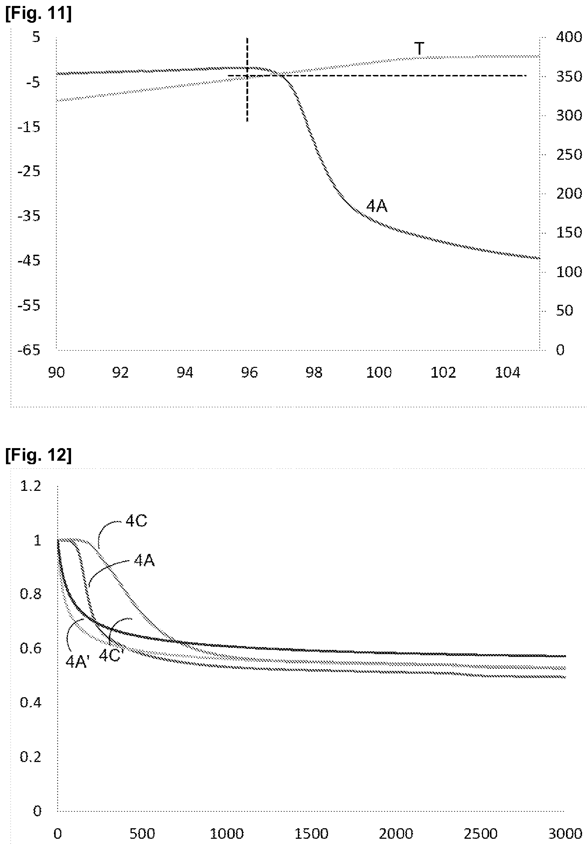

Ensuite, de la courbe de la **figure 10,** la température $T_{onset}$ est déterminée à 345°C à partir de la position du maximum local de l'épaisseur de l'empilement. Cela est mieux illustré sur la **figure 11** qui constitue un agrandissement de la **figure 10.**

Les courbes expérimentales (4A, 4C) et calculées (4A', 4C') du rapport $H(t)/H_o$ (en ordonnée) en fonction du temps sont illustrées sur la **figure 12.** Les courbes calculées correspondent à la fonction $(H(t)/H_o)_{corr}$ décrite ci-dessus, pour laquelle l'ajustement aux courbes expérimentales est le meilleur. Cela permet de déterminer le paramètre de viscosité homogène équivalente $\eta$.

Le rapport $H(t)/H_o$ de l'empilement de semi-produits selon le premier test à 500 secondes de la $T_{onset}$ est 0,58. Cette valeur est inférieure à 0,8, ce qui est dans l'intervalle cible du troisième paramètre.

Enfin, le rapport de la viscosité homogène équivalente de l'empilement des semi-produits du deuxième test sur la viscosité homogène équivalente de l'empilement des semi-produits du premier test est 2, ce qui est dans l'intervalle cible du deuxième paramètre.

Par conséquent, ce semi-produit remplit les trois paramètres pour avoir des bonnes propriétés d'écoulement.

Ainsi, la présente invention fournit un procédé d'analyse de semi-produits qui permet de distinguer les semi-produits présentant de bonnes propriétés d'écoulement de ceux ne présentant pas de bonnes propriétés d'écoulement. Ce procédé d'analyse permet de déterminer les semi-produits pouvant être consolidés de manière efficace pour préparer des matériaux composites de haute qualité.

**Revendications**

1. Procédé d'analyse de semi-produits comprenant des fibres de renfort ayant une orientation essentiellement unidirectionnelle et une résine thermoplastique, le procédé étant **caractérisé en ce qu'**il comprend:

    - un premier test comprenant :

        - la préparation d'un empilement d'au moins deux semi-produits identiques, les fibres des semi-produits adjacents ayant une différence d'orientation de 0° ;
        - le chauffage de l'empilement jusqu'à une température supérieure à la température de fusion de la résine ;
        - le refroidissement de l'empilement jusqu'à une température inférieure à la température de cristallisation ;
        - l'empilement étant comprimé selon une direction de compression orthogonale à l'orientation des fibres de l'ensemble des semi-produits pendant le chauffage et le refroidissement ;
        - la mesure de l'épaisseur de l'empilement selon la direction de compression au cours du temps ;
        - la détermination de la viscosité homogène équivalente de l'empilement à partir de la mesure de l'épaisseur de l'empilement au cours du temps, comme expliqué dans la description; et

    - un deuxième test comprenant :

        - la préparation d'un empilement d'au moins deux semi-produits identiques, les fibres des semi-produits adjacents ayant une différence d'orientation de 90° ;
        - le chauffage de l'empilement jusqu'à une température supérieure à la température de fusion de la résine ;
        - le refroidissement de l'empilement jusqu'à une température inférieure à la température de cristallisation;
        - l'empilement étant comprimé selon une direction de compression orthogonale à l'orientation des fibres de l'ensemble des semi-produits pendant le chauffage et le refroidissement ;
        - la mesure de l'épaisseur de l'empilement selon la direction de compression au cours du temps ;
        - la détermination de la viscosité homogène équivalente de l'empilement à partir de la mesure de l'épaisseur de l'empilement au cours du temps, comme expliqué dans la description;

le procédé comprenant en outre :

- la détermination d'un premier paramètre correspondant à la réduction d'épaisseur totale de l'empilement des semi-produits au cours du premier test comme expliqué dans la description;
- la détermination d'un deuxième paramètre correspondant au rapport de la viscosité homogène équivalente de l'empilement des semi-produits du deuxième test sur la viscosité homogène équivalente de l'empilement des semi-produits du premier test, ces viscosités étant déterminées comme expliqué dans la description:
- la détermination d'un troisième paramètre correspondant au rapport de l'épaisseur H(t) de l'empilement des semi-produits du premier test au bout d'une durée de référence à partir de l'instant, au cours de l'étape de chauffage, du début de fusion de l'empilement des semi-produits, sur l'épaisseur $H_0$ à $T_{onset}$ de l'empilement des semi-produits du premier test à l'instant, au cours de l'étape de chauffage, du début de fusion de l'empilement des semi-produits

la température de fusion et de cristallisation étant mesurées par calorimétrie différentielle à balayage (DSC) selon la norme ISO 11357-3, et la température $T_{onset}$ étant mesurée comme indiqué dans la description.

2. Procédé selon la revendication 1, dans lequel la compression dans le premier test et le deuxième test est à une pression de 0,5 à 2 bar, de préférence de 0,8 bar à 1,2 bar, de préférence de 0,8 bar.

3. Procédé selon l'une des revendication 1 ou 2, dans lequel la durée de référence pour la détermination du troisième paramètre est de 500 s.

4. Procédé selon l'une des revendications 1 à 3, comprenant une étape de validation de l'empilement des semi-produits si le premier paramètre, le deuxième paramètre et le troisième paramètre ont des valeurs comprises dans des intervalles cibles respectifs.

5. Procédé selon la revendication 4, dans lequel :

- l'intervalle cible du premier paramètre est d'au moins 15 % ; et/ou
- l'intervalle cible du deuxième paramètre est de 1 à 5 ; et/ou
- l'intervalle cible du troisième paramètre est inférieur à 0,8 pour une durée de référence de 500 s.

6. Procédé selon la revendication 1, comprenant une étape de validation de l'empilement des semi-produits si le premier paramètre, le deuxième paramètre et le troisième paramètre ont des valeurs comprises dans des intervalles cibles respectifs, et dans lequel la compression dans le premier test et le deuxième test est à une pression de 0,8 bar, la durée de référence pour la détermination du troisième paramètre est de 500 s, l'intervalle cible du premier paramètre est d'au moins 15 %, l'intervalle cible du deuxième paramètre est de 1 à 5 et l'intervalle cible du troisième paramètre est inférieur à 0,8.

7. Semi-produit comprenant des fibres de renfort ayant une orientation essentiellement unidirectionnelle et une résine thermoplastique, le semi-produit satisfaisant à la validation du procédé d'analyse conforme à la revendication 6.

8. Semi-produit selon la revendication 7, dans lequel la résine thermoplastique est choisie dans le groupe des polyamides, des polyimides, en particulier les polyétherimides, des polyaryléthercétones, en particulier les polyéthercétones, les polyéthercétonecétones et polyétheréthercétones, du polytéréphtalate d'éthylène, des polyoléfines, en particulier le polypropylène, du polysulfure de phénylène, des polysulfones, des polymères halogénés, en particulier le polychlorure de vinyle et le polyfluorure de vinylidène, des polymères acryliques ou méthacryliques, et est de préférence un polyaryléthercétone tel que le polyéthercétone, le polyéthercétonecétone, le polyétheréthercétone, ou un de leurs copolymères, notamment ceux comprenant des unités étheréthercétones et étherdiphényléthercétones.

9. Semi-produit selon l'une des revendications 7 ou 8, dans lequel les fibres de renfort sont des fibres de carbone et/ou des fibres de verre.

10. Semi-produit selon l'une des revendications 7 à 9, dans lequel la résine thermoplastique a une température de fusion de 250 à 400°C, de préférence de 280 à 380°C, et encore de préférence de 300 à 350°C.

**11.** Procédé de fabrication d'une pièce composite à partir d'au moins deux semi-produits selon l'une des revendications 7 à 10, le procédé comprenant les étapes suivantes :

- la fourniture du semi-produits ;
- l'empilement des semi-produits ;
- le chauffage sous pression du semi-produits à une température supérieure à la température de fusion de la résine, afin de provoquer la fusion de la résine et la consolidation des semi-produits; et
- le refroidissement des semi-produits afin d'obtenir la pièce composite.

**12.** Procédé selon la revendication 11, dans lequel, lors de l'empilement des semi-produits : les fibres des semi-produits adjacents ont une différence d'orientation de 0 à 90°, en valeur absolue.

**13.** Procédé selon l'une des revendications 11 à 12, dans lequel les semi-produits sont consolidés hors autoclave.

**14.** Utilisation d'un semi-produit selon l'une des revendications 7 à 10, pour la fabrication de pièces composites par consolidation hors autoclave.

**Patentansprüche**

**1.** Verfahren zur Analyse von Halbzeugen, die Verstärkungsfasern mit einer im Wesentlichen unidirektionalen Ausrichtung und ein thermoplastisches Harz umfassen, wobei das Verfahren **dadurch gekennzeichnet ist, dass** es Folgendes umfasst:

- eine erste Prüfung, umfassend:

  - das Vorbereiten eines Stapels aus mindestens zwei identischen Halbzeugen, wobei die Fasern der benachbarten Halbzeuge eine Ausrichtungsdifferenz von 0° aufweisen;
  - das Erwärmen des Stapels bis auf eine Temperatur über der Schmelztemperatur des Harzes;
  - das Abkühlen des Stapels bis auf eine Temperatur unter der Kristallisationstemperatur;
  - wobei der Stapel während des Erwärmens und Abkühlens entlang einer orthogonal zur Ausrichtung der Fasern sämtlicher Halbzeuge verlaufenden Pressrichtung gepresst wird;
  - das Messen der Dicke des Stapels entlang der Pressrichtung im Zeitverlauf;
  - das Bestimmen der äquivalenten homogenen Viskosität des Stapels ausgehend von der Messung der Dicke des Stapels im Zeitverlauf, wie in der Beschreibung erläutert;
  und
- eine zweite Prüfung, umfassend:

  - das Vorbereiten eines Stapels aus mindestens zwei identischen Halbzeugen, wobei die Fasern der benachbarten Halbzeuge eine Ausrichtungsdifferenz von 90° aufweisen;
  - das Erwärmen des Stapels bis auf eine Temperatur über der Schmelztemperatur des Harzes;
  - das Abkühlen des Stapels bis auf eine Temperatur unter der Kristallisationstemperatur;
  - wobei der Stapel während des Erwärmens und Abkühlens entlang einer orthogonal zur Ausrichtung der Fasern sämtlicher Halbzeuge verlaufenden Pressrichtung gepresst wird;
  - das Messen der Dicke des Stapels entlang der Pressrichtung im Zeitverlauf;
  - das Bestimmen der äquivalenten homogenen Viskosität des Stapels ausgehend von der Messung der Dicke des Stapels im Zeitverlauf, wie in der Beschreibung erläutert;

  das Verfahren umfassend ferner:

  - das Bestimmen eines ersten Parameters, der der Gesamtdickenverringerung des Stapels der Halbzeuge während der ersten Prüfung entspricht, wie in der Beschreibung erläutert;
  - das Bestimmen eines zweiten Parameters, der dem Verhältnis der äquivalenten homogenen Viskosität des Stapels der Halbzeuge der zweiten Prüfung zu der äquivalenten homogenen Viskosität des Stapels der Halbzeuge der ersten Prüfung entspricht, wobei diese Viskositäten wie in der Beschreibung erläutert bestimmt werden:
  - das Bestimmen eines dritten Parameters, der dem Verhältnis der Dicke H(t) des Stapels der Halbzeuge der ersten Prüfung nach einer Referenzdauer ab dem Zeitpunkt, während des Erwärmungsschritts, des Schmelzbeginns des Stapels der Halbzeuge zu der Dicke $H_0$ bei $T_{onset}$ des Stapels der Halbzeuge der ersten Prüfung zu dem Zeitpunkt, während des Erwärmungsschritts, des Schmelzbeginns des Stapels der Halbzeuge entspricht

wobei die Schmelz- und die Kristallisationstemperatur mittels dynamischer Differenzkalorimetrie (DSC) nach der Norm ISO 11357-3 gemessen werden und wobei die Temperatur $T_{onset}$ wie in der Beschreibung angegeben gemessen wird.

2. Verfahren nach Anspruch 1, wobei das Pressen bei der ersten Prüfung und der zweiten Prüfung bei einem Druck von 0,5 bis 2 bar, vorzugsweise von 0,8 bar bis 1,2 bar, vorzugsweise von 0,8 bar, erfolgt.

3. Verfahren nach einem der Ansprüche 1 oder 2, wobei die Referenzdauer zur Bestimmung des dritten Parameters 500 s beträgt.

4. Verfahren nach einem der Ansprüche 1 bis 3, umfassend einen Schritt des Validierens des Stapelns der Halbzeuge, wenn der erste Parameter, der zweite Parameter und der dritte Parameter Werte aufweisen, die in jeweiligen Zielintervallen enthalten sind.

5. Verfahren nach Anspruch 4, wobei:

- das Zielintervall des ersten Parameters mindestens 15 % beträgt; und/oder
- das Zielintervall des zweiten Parameters 1 bis 5 beträgt; und/oder
- das Zielintervall des dritten Parameters bei einer Referenzdauer von 500 s kleiner als 0,8 ist.

6. Verfahren nach Anspruch 1, das einen Schritt des Validierens des Stapelns der Halbzeuge umfasst, wenn der erste Parameter, der zweite Parameter und der dritte Parameter Werte aufweisen, die in jeweiligen Zielintervallen enthalten sind, und bei dem das Pressen bei der ersten Prüfung und der zweiten Prüfung bei einem Druck von 0,8 bar erfolgt, die Referenzdauer zur Bestimmung des dritten Parameters 500 s beträgt, das Zielintervall des ersten Parameters mindestens 15 % beträgt, das Zielintervall des zweiten Parameters 1 bis 5 beträgt und das Zielintervall des dritten Parameters kleiner als 0,8 ist.

7. Halbzeug, das Verstärkungsfasern mit einer im Wesentlichen unidirektionalen Ausrichtung und ein thermoplastisches Harz umfasst, wobei das Halbzeug die Validierung des Verfahrens zur Analyse nach Anspruch 6 erfüllt.

8. Halbzeug nach Anspruch 7, wobei das thermoplastische Harz aus der Gruppe der Polyamide, der Polyimide, insbesondere den Polyetherimiden, den Polyaryletherketonen, insbesondere den Polyetherketonen, den Polyetherketonketonen und Polyetheretherketonen, dem Polyethylenterephthalat, den Polyolefinen, insbesondere Polypropylen, Polyphenylensulfid, den Polysulfonen, den halogenierten Polymeren, insbesondere Polyvinylchlorid und Polyvinylidenfluorid, den acrylischen oder methacrylischen Polymeren ausgewählt ist und vorzugsweise ein Polyaryletherketon wie das Polyetherketon, das Polyetherketonketon, das Polyetheretherketon oder eines ihrer Copolymere ist, insbesondere diejenigen, die Etheretherketon- und Etherdiphenyletherketon-Einheiten umfassen.

9. Halbzeug nach einem der Ansprüche 7 oder 8, wobei die Verstärkungsfasern Kohlenstofffasern und/oder Glasfasern sind.

10. Halbzeug nach einem der Ansprüche 7 bis 9, wobei das thermoplastische Harz eine Schmelztemperatur von 250 bis 400 °C, vorzugsweise von 280 bis 380 °C und besonders bevorzugt von 300 bis 350 °C aufweist.

11. Verfahren zur Herstellung eines Verbundteils aus mindestens zwei Halbzeugen nach einem der Ansprüche 7 bis 10, wobei das Verfahren die folgenden Schritte umfasst:

- das Bereitstellen der Halbzeuge;
- das Stapeln der Halbzeuge;
- das Erwärmen der Halbzeuge unter Druck auf eine Temperatur über der Schmelztemperatur des Harzes, um das Schmelzen des Harzes und das Verfestigen der Halbzeuge zu bewirken; und
- das Abkühlen der Halbzeuge, um das Verbundteil zu erhalten.

12. Verfahren nach Anspruch 11, wobei bei dem Stapeln der Halbzeuge die Fasern der benachbarten Halbzeuge betragsmäßig eine Ausrichtungsdifferenz von 0 bis 90° aufweisen.

13. Verfahren nach einem der Ansprüche 11 bis 12, bei dem die Halbzeuge außerhalb eines Autoklaven verfestigt werden.

14. Verwenden eines Halbzeugs nach einem der Ansprüche 7 bis 10 zur Herstellung von Verbundteilen durch Verfestigung außerhalb eines Autoklaven.

**Claims**

1. Method for analysing semifinished products comprising reinforcing fibres having an essentially unidirectional orientation and a thermoplastic resin, the method being **characterized in that** it comprises:

   - a first test comprising:

     - preparing a stack of at least two identical semifinished products, the fibres of the adjacent semifinished products having a difference in orientation of 0°;
     - heating the stack to a temperature above the melting temperature of the resin;
     - cooling the stack to a temperature below the crystallization temperature;
     - the stack being compressed in a direction of compression orthogonal to the orientation of the fibres of all the semifinished products during the heating and cooling;
     - measuring the thickness of the stack in the direction of compression over time;
     - determining the equivalent homogeneous viscosity of the stack from the measurement of the thickness of the stack over time, as explained in the description;
     and
   - a second test comprising:

     - preparing a stack of at least two identical semifinished products, the fibres of the adjacent semifinished products having a difference in orientation of 90°;
     - heating the stack to a temperature above the melting temperature of the resin;
     - cooling the stack to a temperature below the crystallization temperature;
     - the stack being compressed in a direction of compression orthogonal to the orientation of the fibres of all the semifinished products during the heating and cooling;
     - measuring the thickness of the stack in the direction of compression over time;
     - determining the equivalent homogeneous viscosity of the stack from the measurement of the thickness of the stack over time, as explained in the description;

   the method further comprising:

     - determining a first parameter corresponding to the total thickness reduction of the stack of semifinished products during the first test as explained in the description;
     - determining a second parameter corresponding to the ratio of the equivalent homogeneous viscosity of the stack of semifinished products from the second test to the equivalent homogeneous viscosity of the stack of semifinished products from the first test, these viscosities being determined as explained in the description:
     - determining a third parameter corresponding to the ratio of the thickness $H(t)$ of the stack of semifinished products from the first test after a reference time starting from the moment, during the heating step, of the onset of melting of the stack of semifinished products, to the thickness $H_0$ at $T_{onset}$ of the stack of semifinished products from the first test at the moment, during the heating step, of the onset of melting of the stack of semifinished products,

   the melting temperature and crystallization temperature being measured by differential scanning calorimetry (DSC) according to standard ISO 11357-3, and the temperature $T_{onset}$ being measured as indicated in the description.

2. Method according to Claim 1, wherein the compression in the first test and the second test is at a pressure of 0.5 to 2 bar, preferably 0.8 bar to 1.2 bar, preferably 0.8 bar.

3. Method according to either of Claims 1 and 2, wherein the reference time for the determination of the third parameter is 500 s.

4. Method according to one of Claims 1 to 3, comprising a step of validating the stack of semifinished products if the first parameter, the second parameter and the third parameter have values within respective target ranges.

5. Method according to Claim 4, wherein:

   - the target range of the first parameter is at least 15%; and/or
   - the target range of the second parameter is from 1 to 5; and/or
   - the target range of the third parameter is less than 0.8 for a reference time of 500 s.

6. Method according to Claim 1, comprising a step of validating the stack of semifinished products if the first parameter, the second parameter and the third parameter have values within respective target ranges, and wherein the compression in the first test and the second test is at a pressure of 0.8 bar, the reference time for determining the third parameter is 500 s, the target range of the first parameter is at least 15%, the target range of the second parameter is from 1 to 5 and the target range of the third parameter is less than 0.8.

7. Semifinished product comprising reinforcing fibres having an essentially unidirectional orientation and a thermoplastic resin, the semifinished product satisfying the validation of the analysis method in accordance with Claim 6.

8. Semifinished product according to Claim 7, wherein the thermoplastic resin is chosen from the group of polyamides, polyimides, in particular polyetherimides, polyaryletherketones, in particular polyetherketones, polyetherketoneketones and polyetheretherketones, polyethylene terephthalate, polyolefins, in particular polypropylene, polyphenylene sulfide, polysulfones, halogenated polymers, in particular polyvinyl chloride and polyvinylidene fluoride, acrylic or methacrylic polymers, and is preferably a polyaryletherketone such as polyetherketone, polyetherketoneketone, polyetheretherketone, or one of the copolymers thereof, in particular copolymers comprising etheretherketone and etherdiphenyletherketone units.

9. Semifinished product according to either of Claims 7 and 8, wherein the reinforcing fibres are carbon fibres and/or glass fibres.

10. Semifinished product according to one of Claims 7 to 9, wherein the thermoplastic resin has a melting temperature of from 250°C to 400°C, preferably from 280°C to 380°C, and more preferably from 300°C to 350°C.

11. Method for manufacturing a composite part from at least two semifinished products according to one of Claims 7 to 10, the method comprising the following steps:

   - supplying the semifinished products;
   - stacking the semifinished products;
   - heating the semifinished products under pressure to a temperature above the melting temperature of the resin, in order to bring about the melting of the resin and the consolidation of the semifinished products; and
   - cooling the semifinished products in order to obtain the composite part.

12. Method according to Claim 11, wherein, during the stacking of the semifinished products: the fibres of the adjacent semifinished products have a difference in orientation of from 0 to 90°, in absolute value.

13. Method according to either of Claims 11 and 12, wherein the semifinished products are consolidated out-of-autoclave.

14. Use of a semifinished product according to one of Claims 7 to 10, for the manufacture of composite parts by out-of-autoclave consolidation.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140154472 A
- US 20100170637 A
- US 20140005331 A
- US 20130164498 A
- US 20110097575 A
- US 20120107560 A
- WO 2019097148 A1
- EP 2090423 A1

**Littérature non-brevet citée dans la description**

- In-situ Monitoring of the Out-Ot-Autoclave Consolidation of Carbon/Poly-Ether-Ketone-Ketone Prepreg Laminate. *FRONTIERS IN MATERIALS*